# EUROPEAN PATENT APPLICATION

(11) **EP 3 564 798 A1**
(43) Date of publication of application: **06.11.2019**
(21) Application number: 16925409.1
(22) Date of filing: 27.12.2016
(51) Int. Cl.: G06F 3/041

(54) **ELECTRONIC DEVICE AND DISPLAY CONTROL METHOD THEREFOR**

(71) Applicant: Shenzhen Royole Technologies Co., Ltd., Shenzhen, Guangdong 518052 (CN)
(72) Inventor: WANG, Ji, Shenzhen Guangdong 518052 (CN)
(74) Representative: Hamer, Christopher K.
(86) International application number: PCT/CN2016/112341
(87) International publication number: WO 2018/119647

(57) **Abstract**

The present disclosure discloses a display control method, which is applied to an electronic device. The electronic device includes a display screen, a direction sensor, and a motion sensor. The method includes: a placement state of the electronic device is sensed by the direction sensor and a distance between the electronic device and the target object located in front of the electronic device is sensed by the motion sensor; and display parameters of the display screen are adjusted according to the placement state sensed by the direction sensor and the distance sensed by the distance sensor. The present disclosure also discloses the electronic device. The electronic device and the display control method of the present disclosure can adjust the display parameters of the electronic device according to the placement state of the electronic device and the distance between the electronic device and the target object in front of the electronic device, thereby achieving the effect of intelligent power saving without affecting normal use of the electronic device.

## Description

### TECHNICAL FIELD

The present disclosure relates to a device, and in particular, to an electronic device and a display control method thereof.

### BACKGROUND

At present, portable electronic devices such as mobile phones and tablet computers have been widely used, which greatly facilitates people's lives. When the existing portable electronic device is not operated for a preset time, the existing portable electronic device automatically enters a sleep state in which the screen is closed from a work state in which the screen is brightened, which saves electricity. However, the display parameters of the existing portable electronic device are basically unchanged in the work state, and when the user does not watch the screen of the portable electronic device, the display parameters are still displayed with fixed display parameters such as brightness, resolution, etc., which brings a waste of electricity.

### SUMMARY

The embodiments of the present disclosure disclose an electronic device and a display control method thereof, which can dynamically adjust display parameters of the electronic device according to a placement state of the electronic device and a distance from the user, so as to achieve an effect of better power saving without affecting normal use of the electronic device.

The electronic device disclosed in the embodiments of the present disclosure includes a display screen and a processor. The electronic device further includes: a direction sensor for sensing a placement state of the electronic device, and a distance sensor disposed at a front side of the electronic device for sensing a distance between the electronic device and a target object in front of the electronic device. The processor is coupled to the direction sensor, the distance sensor, and the display screen. The processor is configured to adjust display parameters of the display screen according to the placement state sensed by the direction sensor and the distance sensed by the distance sensor.

The display control method disclosed in the embodiments of the present disclosure is applied to an electronic device. The electronic device includes a display screen, a direction sensor, and a motion sensor. The method includes the steps of: sensing a placement state of the electronic device by the direction sensor; sensing a distance between the electronic device and a target object located in front of the electronic device by the distance sensor; and adjusting display parameters of the display screen according to the placement state sensed by the direction sensor and the distance sensed by the distance sensor.

The electronic device and the display control method of the present disclosure can adjust the display parameters of the display screen according to the placement state of the electronic device and the distance from the user, so as to achieve a effect of intelligent power saving without affecting normal use of the electronic device.

### BRIEF DESCRIPTION OF THE ACCOMPANYING DRAWINGS

In order to more clearly illustrate the technical solutions in the embodiments of the present disclosure, the drawings to be used in the embodiments will be briefly described below. It is obvious that the drawings in the following description are only some embodiments of the present disclosure. Those skilled in the art can also obtain other drawings based on these drawings without paying any creative work.
FIG. 1 is a structural block diagram of an electronic device according to one embodiment of the present disclosure.
FIG. 2 is a schematic diagram of an electronic device in a reference position according to a first embodiment of the present disclosure.
FIGS. 3-4 are schematic diagrams of a placement state of an electronic device changing from a reference position to a first preset position according to one embodiment of the present disclosure.
FIGS. 5-6 are schematic diagrams of a placement state of an electronic device changing from a first preset position to other preset positions according to one embodiment of the present disclosure.
FIGS. 7-9 are schematic diagrams of a placement state of an electronic device changing from a reference position to other preset positions according to one embodiment of the present disclosure.
FIG. 10 is a flowchart of a display control method according to one embodiment of the present disclosure.
FIG. 11 is a sub-flow diagram of step S603 of FIG. 10 in one embodiment.

### DETAILED DESCRIPTION OF ILLUSTRATED EMBODIMENTS

The technical solutions in the embodiments of the present disclosure are clearly and completely described in the following with reference to the accompanying drawings in the embodiments of the present disclosure. It is obvious that the described embodiments are only a part of the embodiments of the present disclosure, and not all of the embodiments. All other embodiments obtained by those skilled in the art based on the embodiments of the present disclosure without creative efforts are within the scope of the present disclosure.

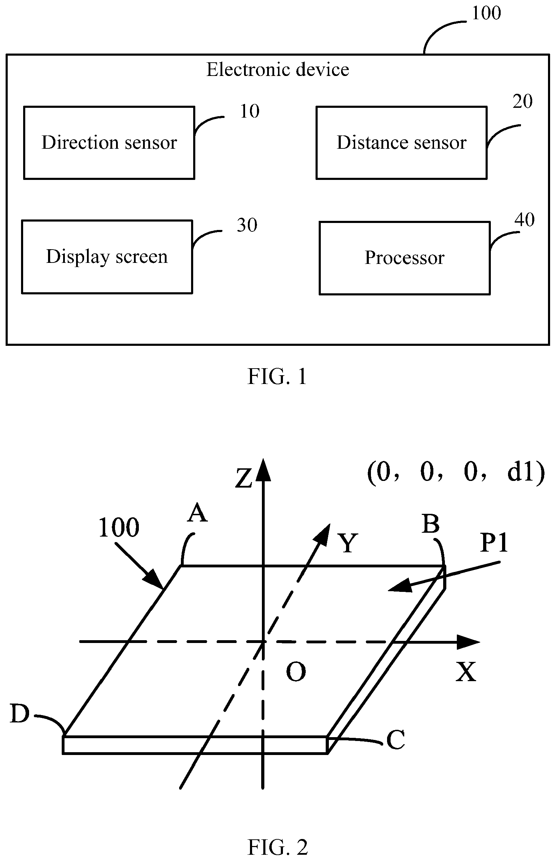

Please referring to FIG. 1, a schematic diagram of an electronic device 100 according to one embodiment of the present disclosure is illustrated. As shown in FIG. 1, the electronic device 100 includes a direction sensor 10, a distance sensor 20, a display screen 30, and a processor 40.

The direction sensor 10 is configured to sense a placement state of the electronic device 100. The distance sensor 20 is disposed on a front side of the electronic device 100 for sensing a distance d between the electronic device 100 and a target object B1 located in front of the electronic device 100.

The processor 40 is coupled to the direction sensor 10, the distance sensor 20, and the display screen 30. The processor 40 is configured to adjust display parameters of the display screen 30 according to the placement state sensed by the direction sensor 10 and the distance d sensed by the distance sensor 20.

In some embodiments, the processor 40 first determines whether the distance d sensed by the distance sensor 20 is less than a predetermined distance d1. When the distance d sensed by the distance sensor 20 is less than the preset distance, the processor 40 adjusts display parameters of the display screen 30 according to the placement state sensed by the direction sensor 10 and the distance d sensed by the distance sensor 20. When the distance d sensed by the distance sensor 20 is determined to be greater than or equal to the preset distance, the processor 40 adjusts the display parameters of the display screen 30 only according to the placement state sensed by the direction sensor 10.

In some embodiments, the direction sensor 10 senses the placement state of the electronic device 100 in real time, and the distance sensor 20 senses the distance d between the electronic device 100 and the target object B1 located in front of the electronic device 100 in real time. The processor 40 determines a change of the placement state of the electronic device 100 according to the placement state of the electronic device 100 sensed by the direction sensor 10 in real time, and further determines a change of the distance d according to the distance d sensed by the distance sensor 20 in real time, and then adjusts the display parameters of the display screen 30 according to the change of the placement state of the electronic device 100 and the change of the distance d sensed by the distance sensor.

In some embodiments, when the distance d sensed by the distance sensor 20 is less than the preset distance, the processor 40 adjusts the display parameters of the display screen 30 according to the placement state sensed by the direction sensor 10 and the distance d sensed by the distance sensor 20, includes: the processor adjusts the display parameters of the display screen 30 thus increasing a display quality of the display screen 30 when the placement state of the electronic device 100 sensed by the direction sensor 10 changes from a reference position to a first preset position, and/or the distance d sensed by the distance sensor 20 gradually becomes smaller.

In some embodiments, when the distance d sensed by the distance sensor 20 is less than the preset distance, the processor 40 adjusts the display parameters of the display screen 30 according to the placement state sensed by the direction sensor 10 and the distance d sensed by the distance sensor 20, includes: the processor adjusts the display parameters of the display screen 30 thus reducing a display quality of the display screen 30 when the placement state of the electronic device 100 sensed by the direction sensor 10 changes from the first preset position to the reference position or other preset position, and/ or, the distance d sensed by the distance sensor 20 gradually becomes greater.

In some embodiments, when the distance d sensed by the distance sensor 20 is determined to be greater than the preset distance, the processor 40 adjusts the display parameters of the display screen 30 only according to the placement state sensed by the direction sensor 10, includes: when the electronic device 100 is in the reference position, the processor 40 controls the display screen 30 to display with initial display parameters, and when the electronic device 100 changes from the reference position to other preset position, the processor 40 adjusts the display parameters of the display screen 30 thus gradually reducing the display quality of the display screen 30 until the display screen 30 is closed.

In some embodiments, when the distance d sensed by the distance sensor 20 is determined to be greater than the preset distance, the processor 40 adjusts the display parameters of the display screen 30 only according to the placement state sensed by the direction sensor 10, includes: when the electronic device 100 changes from the other preset position to the reference position, the processor 40 controls to turn on the display screen, and adjusts the display parameters of the display screen 30 thus gradually increasing the display quality of the display screen 30; and when the electronic device 100 reaches the reference position, the processor 40 controls the display screen 30 to display with initial display parameters.

Referring to FIG. 2 together, in some embodiments, the reference position is a position where the electronic device 100 is placed horizontally and the front side of the electronic device 100 faces up. As shown in FIG. 2, it is assumed that the two top end points of the electronic device 100 are A and B, and the two bottom end points are C and D. Wherein, the two top end points A, B constitute a top edge AB, the two bottom end points constitute a bottom edge CD, the top end point A and the bottom end point D constitute a first side edge AD, and the top end point B and the bottom end point C constitute a second side BC. The first preset position may be a position where, when the electronic device 100 is in the reference position, the top side AB of the electronic device 100 is rotated upward about the bottom edge CD to a position where the electronic device 100 is placed vertically and the top edge AB of the electronic device 100 is located at a top position. That is, the first preset position is a position where the electronic device 100 is placed vertically and the top edge AB of the electronic device 100 is located at the top position.

The other preset position includes, but is not limited to, a position where the front side of the electronic device 100 faces down, when the electronic device 100 is in the reference position, the top edge AB of the electronic device 100 is rotated downward around the bottom edge CD to a position where the electronic device 100 is placed vertically and the top edge AB of the electronic device 100 is located at a bottom position, and the like. That is, the other preset position includes, but is not limited to, a placement position where the front side of the electronic device 100 faces down, a placement position where the electronic device 100 is placed vertically and the top edge AB of electronic device 100 is located at the bottom position, and the like. Of course, the first preset position and other preset position described above can be obtained by other rotation manners rotating from the reference position or other position.

The following describes a working process of the present disclosure by taking a use scenario in which the target object B1 is located at a bottom side of the electronic device 100 as an example.

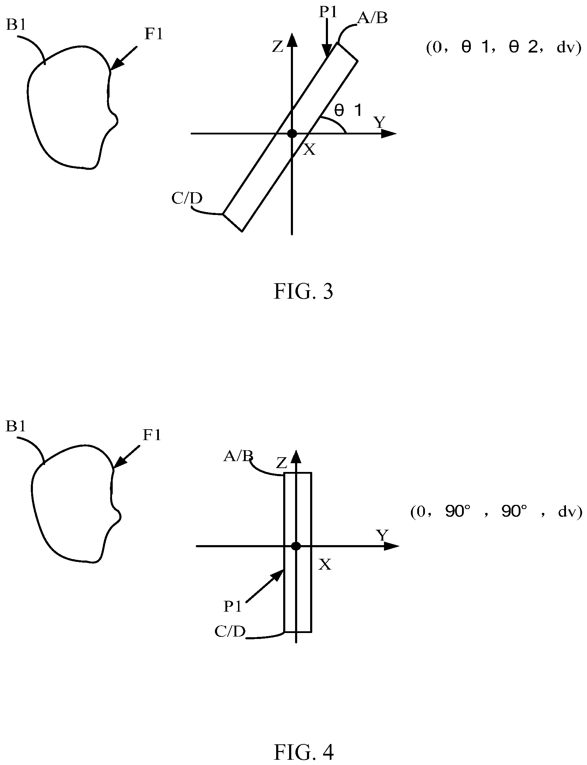

Please referring to FIGS. 3 and 4, a schematic diagram of a rotation of the electronic device 100 from the reference position to the first preset position is illustrated. FIGS. 3-4 are schematic diagrams of a side viewing angle of the target object B1 and the electronic device 100.

As shown in FIG. 2, it is assumed that the electronic device 100 is in the reference position at this time, the three-dimensional coordinates of the electronic device 100 are (0, 0, 0). In the present disclosure, the target object B1 is a person, it is assumed that the face F1 of the target object B1 is facing front. At this time, the distance sensor 20 disposed on the front side of the electronic device 100 cannot detect the target object B1, and the distance sensed by the distance sensor 20 will exceed the preset distance d1.

Herein, the distance exceeding the preset distance d1 is uniformly defined as d1, and the distance is taken as one dimension, and the coordinates of the electronic device 100 at the reference position may be four-dimensional coordinates (0, 0, 0, d1).

As shown in FIG. 3, when the placement state of the electronic device 100 changes from the reference position to the first preset position, when the top edge AB of the electronic device 100 is rotated upward by an angle θ1 around the bottom edge CD, as shown in FIG. 3, the coordinates of the electronic device 100 at this time are (0, θ1, θ2, dv), where θ1 is the angle at which the electronic device 100 moves relative to the reference position in the Y-axis direction at this time, and θ2 is the angle at which the electronic device 100 moves relative to the reference position in the Z-axis direction at this time, dv is the distance currently sensed by the distance sensor 20 from the target object B1, and is smaller than the preset distance d1.

As shown in FIG. 4, when the electronic device 100 continues to rotate to the position where the electronic device 100 is placed vertically and the top side AB of the electronic device 100 is located at the top position, that is, at the first preset position, the coordinates of the electronic device 100 at this time are (0, 90°, 90°, dv). That is, at this time, the electronic device 100 moves by 90° with respect to the reference position in the Y-axis direction and the Z-axis direction, and dv is the distance currently sensed by the distance sensor 20 from the target object B1. Wherein, dv is a dynamic change value.

The placement state of the electronic device 100 as shown in FIG. 4 is the state when the electronic device 100 is in the first preset position, and the coordinates of the electronic device 100 in the first preset position are (0, 90°, 90°, dv).

As described above, it is assumed that the target object B1 is standing and facing forward, when the electronic device 100 changes from the reference position of FIG. 2 to the position of FIG. 3 and continues to change to the first preset position of FIG. 4, the target object B1 will be sensed by the distance sensor 20 and the sensed distance is less than the preset distance. Since the electronic device 100 changes from the reference position to the first preset position, it indicates that the target object B1 is using the electronic device 100, so that the processor 40 adjusts the display parameters of the display screen 30 thus gradually increasing the display quality to facilitate the use of the target object B1. However, when the electronic device 100 changes from the reference position to the first preset position, the distance sensed by the distance sensor 20 is gradually reduced. Therefore, when the distance sensed by the distance sensor 20 is determined to be gradually reduced, the processor 40 also adjusts the display parameters of the display screen 30 thus gradually increasing the display quality.

Obviously, after the electronic device 100 is in the first preset position, if the distance sensed by the distance sensor 20 continues to become smaller, the processor 40 further adjusts the display parameters of the display screen 30 thus continuing to increase the display quality.

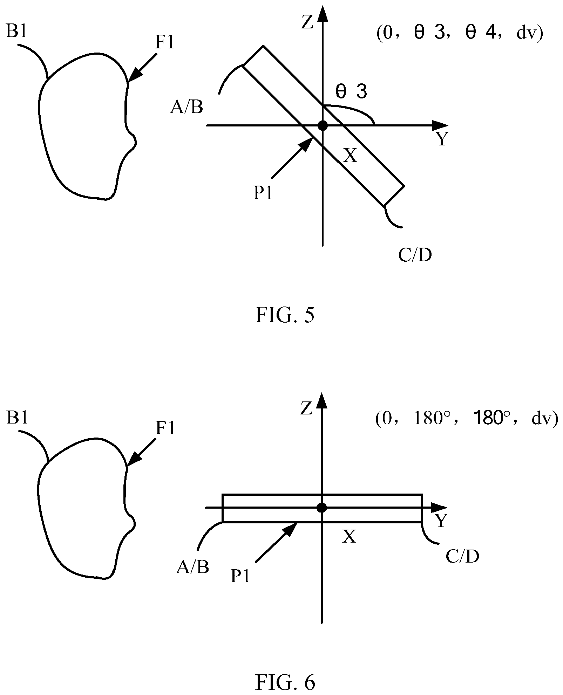

Please referring to FIGS. 5 and 6, schematic diagrams of the electronic device 100 changing from the first preset position to other position are illustrated. FIGS. 5 and 6 are also schematic diagrams of a side viewing angle of the target object B1 and the electronic device 100. As shown in FIG. 5, when the top edge AB of the electronic device 100 is rotated around the bottom edge CD to rotate toward the target object B1, the coordinates of the electronic device 100 are (0, θ3, θ4, dv), where θ3 is the angle at which the electronic device 100 moves relative to the reference position in the Y-axis direction at this time, θ4 is the angle at which the electronic device 100 moves relative to the reference position in the Z-axis direction at this time, and dv is the distance currently sensed by the distance sensor 20 from the target object B1. Wherein, the dv is smaller than the preset distance d1, and θ3 and θ4 are values between 90° and 180°.

Referring to FIG. 6, when the top edge AB of the electronic device 100 continues to rotate in the same direction as FIG. 5 to the other preset position, that is, the front side PI of the electronic device 100 shown in FIG. 6 faces down. At this time, the coordinates of the electronic device 100 are (0, 180°, 180°, d1). At this time, the distance currently detected by the distance sensor 20 from the target object B1 will be a value that is much larger than the preset distance d1, and is defined as the preset distance d1.

Also, it is assumed that the target object B1 is standing and facing forward, during a process of the electronic device 100 changing from the first preset position of FIG. 4 to the position of FIG. 5 and continuing to change to other preset position of FIG. 6, the target object B1 will be sensed by the distance sensor 20 and the sensed distance is less than the preset distance. As when the electronic device 100 changes from the first preset position, the reference position to the other preset position, it indicates that the target object B1 is gradually stopping using the electronic device 100, so that the processor 40 controls the display parameters of the display screen 30 thus gradually reducing the display quality to save electricity. When the electronic device 100 changes from the first preset position to the other preset position, the distance sensed by the distance sensor 20 gradually becomes larger, therefore, when the distance sensed by the distance sensor 20 is determined to gradually become larger, the processor 40 also adjusts the display parameters of the display screen 30 thus gradually reducing the display quality.

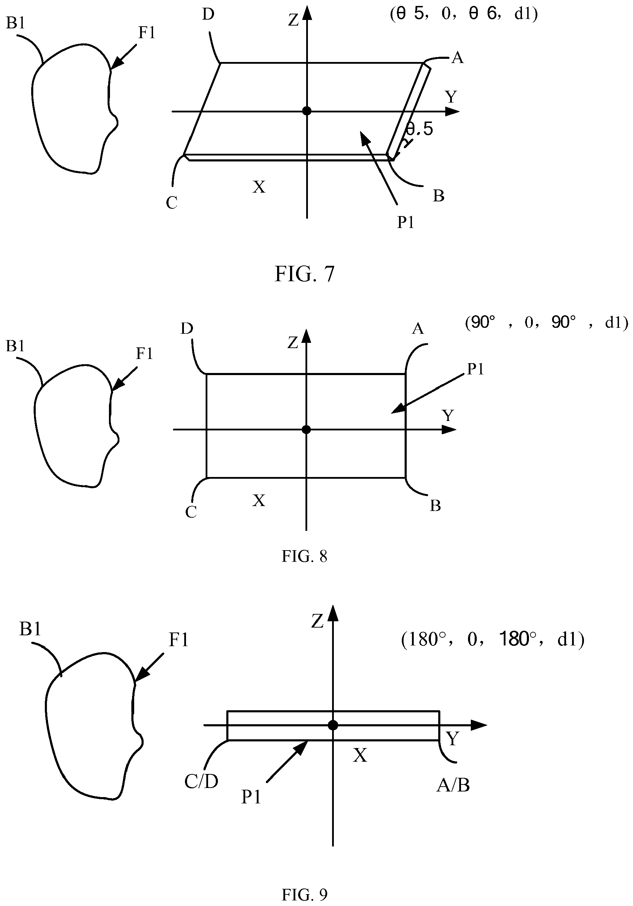

Please referring to FIGS. 7 to 9, schematic diagrams of the electronic device 100 changing from the reference position to other preset position in one embodiment are illustrated. FIGS. 7 to 9 are also schematic diagrams of a side viewing angle of the target object B1 and the electronic device 100.

As shown in FIG. 7, when the electronic device 100 starts from the reference position, the first side AD is rotated upward around the second side BC, when rotated to an angle θ5 less than 90°, the coordinates of electronic device 100 are (θ5, 0, θ6, d1). Wherein θ5 is an angle at which the electronic device 100 moves relative to the reference position in the X-axis direction at this time, and θ6 is an angle at which the electronic device 100 moves relative to the reference position in the Z-axis direction at this time. It is assumed that the target object B1 is facing forward, and at this time, the front side PI of the electronic device 100 will always be perpendicular to the face F1 of the target object B1, and the distance sensed by the distance sensor 20 from the target object B1 will be much larger than the above preset distance d1, as described above, the distance at this time is set to be d1.

As shown in FIG. 8, when the electronic device 100 continues to rotate to a horizontal position where the first side edge AD of the electronic device 100 is located at the top position as shown in FIG. 8, the coordinates of the electronic device 100 are (90°, 0, 90°, d1). The angle at which the electronic device 100 moves relative to the reference position in the X-axis direction is 90°, and the angle at which the electronic device 100 moves relative to the reference position in the Z-axis direction is 90°. Similarly, the front side PI of the electronic device 100 will always be perpendicular to the face F1 of the target object B1, and the distance sensed by the distance sensor 20 from the target object B1 will be much larger than the preset distance d1, as described above, the distance at this time is set to be d1.

As shown in FIG. 9, when the electronic device 100 continues to rotate to a position where the front side PI faces down as shown in FIG. 9, the coordinates of the electronic device 100 are (180°, 0, 180°, d1). Wherein, the angle at which the electronic device 100 moves relative to the reference position in the X-axis direction is 180°, and the angle at which the electronic device 100 moves relative to the reference position in the Z-axis direction is 180°. Similarly, the front side PI of the electronic device 100 will always be perpendicular to the face F1 of the target object B1, and the distance sensed by the distance sensor 20 from the target object B1 will be much larger than the preset distance d1, as described above, the distance at this time is set to be d1.

It can be seen that, as shown in FIG. 7-9, when the electronic device 100 changes from the reference position to other preset position, the distance sensed by the distance sensor 20 from the target object B1 is greater than the preset distance d1, a possibility of the target object B1 using the electronic device 100 is thus getting smaller and smaller; and when the electronic device 100 is in the placement state of which the front side PI faces down as shown in FIG. 9, it indicates that the user does not use the electronic device 100. Therefore, when the electronic device 100 is in the reference position, the processor 40 controls the display screen 30 to display with initial display parameters, when the electronic device 100 changes from the reference position to other preset position, the processor 40 adjusts the display parameters of the display screen 30 thus gradually reducing the display quality of the display screen 30. The processor 40 controls the display screen 30 to be powered off to save energy when the electronic device 100 changes to the other position.

Conversely, when the electronic device 100 changes from FIG. 9 to FIG. 7, and then to FIG. 2, that is, changes from other preset position to the reference position, it indicates that the target device B1 may use the electronic device 100. When the electronic device 100 changes from other preset position to the reference position, the processor 40 controls to turn on the display screen, and adjusts the display parameters of the display screen 30 thus gradually increasing the display quality of the display screen 30; when the electronic device 100 reaches the reference position, the processor 40 controls the display screen 30 to display with the initial display parameters.

In some embodiments, the display parameters of the display screen 30 include parameters such as resolution, sharpness, brightness and the like of the display screen 30. The initial display parameters are medium resolution, medium sharpness, and medium brightness. Adjusting the display parameters of the display screen 30 thus increasing or gradually increasing the display quality of the display screen 30 is to increase the resolution, the sharpness, the brightness, and the like of the display screen 30. Adjusting the display parameters of the display screen 30 thus reducing or gradually reducing the display quality of the display screen 30 is to reduce the resolution, the sharpness, the brightness, and the like of the display screen 30. Obviously, when the resolution, sharpness, brightness, and the like of the display screen 30 are increased, the power consumption is increased. When the resolution, sharpness, brightness, and the like of the display screen 30 are reduced, the power consumption is reduced. Therefore, the electronic device 100 can intelligently save energy without affecting the normal use of the electronic device 100.

In some embodiments, when the distance sensed by the distance sensor 20 is less than the preset distance d1, the processor 40 adjusts the display parameters of the display screen 30 preferentially according to the change of the distance sensed by the distance sensor 20. Therefore, when the target object B1 is in other postures, such as sitting posture, lying posture, etc., as long as the distance sensed by the distance sensor 20 gradually becomes smaller, the display parameters of the display screen 30 are adjusted thus increasing the display quality, and the electronic device 100 can still be ensured to normal be in use.

For example, FIGS. 7-9 illustrate that the distance sensed by the distance sensor 20 is greater than the preset distance d1. However, if the distance sensed by the distance sensor 20 from the target object B1 is less than the preset distance d1, and the electronic device 100 changes from the reference position to the horizontal position as shown in FIG. 8, the processor 40 adjusts the display parameters of the display screen 30 preferentially according to the change of the distance sensed by the distance sensor 20. Thereby, the use of the electronic device 100 while the user side lying on the bed or the like can be ensured.

In some embodiments, the direction sensor 10 is a gyroscope or the like, and the distance sensor 20 may include a light distance sensor, an infrared distance sensor, an ultrasonic sensor, and the like. Preferably, the distance sensor 20 is an infrared distance sensor, and the presence of the target object B1 can be sensed by an infrared detection technology, and then the distance from the target object B1 is determined. Since the infrared distance sensor detects a living body such as a person, it can avoid the misjudgment caused by the distance sensor 20 detecting the distance from a desktop or a wall. Of course, in some embodiments, if only a use in a specific scenario is met, for example, when the user is standing or sitting, the usage of the electronic device 100 is not limited to the infrared distance sensor, and other distance sensors may be used.

The front side P1 of the electronic device 100 herein refers to a side of the electronic device 100 having the display screen 30.

The processor 30 can be a processing chip such as a central processor, a microcontroller, a microprocessor, a single chip microcomputer, or a digital signal processor. The electronic device 100 can be a portable electronic device such as a mobile phone or a tablet computer.

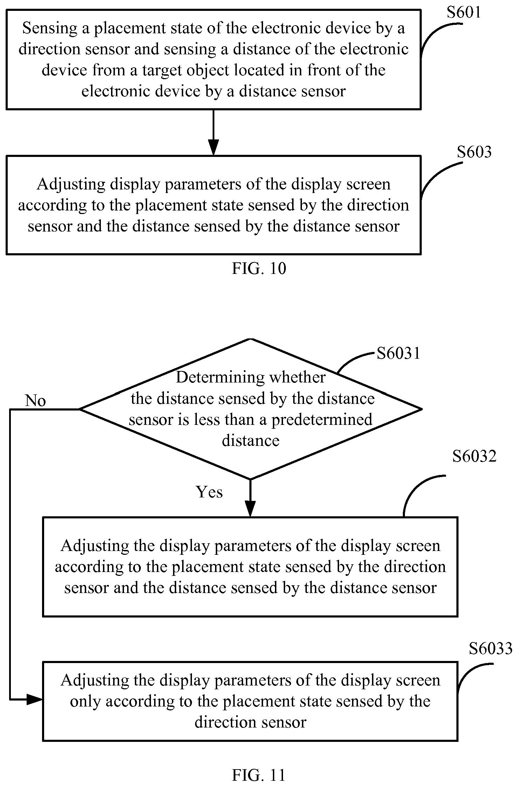

Please referring to FIG. 10, a flowchart of a display control method according to one embodiment of the present disclosure is illustrated. The method is applied to the aforementioned electronic device 100. The method includes the steps of:

A placement state of the electronic device 100 is sensed by the direction sensor 10 and a distance d of the electronic device 100 from the target object B1 located in front of the electronic device 100 is sensed by the distance sensor (S601).

The processor 40 adjusts display parameters of the display screen 30 according to the placement state sensed by the direction sensor 10 and the distance d sensed by the distance sensor 20 (S603).

Please referring to FIG. 11, a sub-flowchart of step S603 of FIG. 10 in one embodiment is illustrated. In some embodiments, the step S603 includes:

The processor 40 first determines whether the distance d sensed by the distance sensor 20 is less than a predetermined distance d1 (S6031). If yes, the process goes to step S6032, otherwise, the process goes to step S6033.

The processor 40 adjusts the display parameters of the display screen 30 according to the placement state sensed by the direction sensor 10 and the distance d sensed by the distance sensor 20 (S6032). In some embodiments, the step S6032 includes: when the placement state of the electronic device 100 sensed by the direction sensor 10 changes from the reference position to the first preset position, and/or the distance d sensed by the distance sensor 20 gradually becomes smaller, the processor adjusts the display parameters of the display screen 30 thus increasing the display quality of the display screen 30. In other embodiments, the step S6032 further includes: when the placement state of the electronic device 100 sensed by the direction sensor 10 changes from the first preset position to the reference position or other preset positions, and/or the distance d sensed by the distance sensor 20 gradually becomes larger, the processor adjusts the display parameters of the display screen 30 thus reducing the display quality of the display screen 30.

The processor 40 adjusts the display parameters of the display screen 30 only according to the placement state sensed by the direction sensor 10 (S6033). In some embodiments, the step S6033 includes: the processor 40 controls the display screen 30 to display with initial display parameters when the electronic device 100 is in the reference position, and adjusts the display parameters of the display screen 30 thus gradually reducing the display quality of the display screen 30 until the display screen 30 is closed when the electronic device 100 changes from the reference position to other preset position. In other embodiments, the step S6033 further includes: the processor 40 controls to turn on the display screen and adjust the display parameters of the display screen 30 thus gradually increasing the display quality of the display screen 30 when the electronic device 100 changes from other preset position to the reference position, and controls the display screen 30 t0 display with initial display parameters when the electronic device 100 reaches the reference position.

In some embodiments, the reference position is a position where the electronic device 100 is placed horizontally and the front side of the electronic device 100 faces up. The first preset position is a position where the electronic device 100 is placed vertically and the top edge AB of the electronic device 100 is located at the top position. The other preset position includes, but is not limited to, a placement position where the front side of the electronic device 100 faces down, when the electronic device 100 is in the reference position, the top edge AB of the electronic device 100 is rotated downward around the bottom edge CD to obtain a position where the electronic device 100 is placed vertically and the top edge AB of the electronic device 100 is located at the bottom position, and the like.

In some embodiments, the display parameters include resolution, sharpness, brightness, and the like. "The display parameters of the display screen 30 are controlled to be adjusted thus increasing the display quality of the display screen 30" includes: at least one of resolution, sharpness, and brightness of the display screen 30 is controlled to be adjusted thus increasing the display quality of the display screen 30. "The display parameters of the display screen 30 is controlled to be adjusted thus reducing the display quality of the display screen 30" includes: at least one of resolution, sharpness, and brightness of the display screen 30 is controlled thus reducing the display quality of the display screen 30.

Therefore, the electronic device 100 and the display control method of the present disclosure can determine whether the electronic device 100 is being used or will be used according to the placement state of the electronic device 100 and the distance from the target object B1, and change the display parameters of the display screen of the electronic device 100, so as to further achieve energy saving effects without affecting the normal use of the user.

The above is a preferred embodiment of the present disclosure, and it should be noted that those skilled in the art can also make several improvements and retouchings without departing from the principles of the present disclosure is the scope of protection of the present disclosure.

## Claims

1. An electronic device, comprising: a display screen and a processor, wherein the electronic device further comprises:
a direction sensor, for sensing a placement state of the electronic device;
a distance sensor, disposed on a front side of the electronic device, for sensing a distance between the electronic device and a target object located in front of the electronic device;
the processor is coupled to the direction sensor, the distance sensor, and the display screen, wherein the processor is configured to adjust display parameters of the display screen according to the placement state sensed by the direction sensor and the distance sensed by the distance sensor.

2. The electronic device according to claim 1, wherein, the processor firstly determines whether the distance sensed by the distance sensor is less than a preset distance, and when the distance sensed by the distance sensor is determined to be smaller than the preset distance, the processor adjusts the display parameters of the display screen according to the placement state sensed by the direction sensor and the distance sensed by the distance sensor.

3. The electronic device according to claim 2, wherein, when the distance sensed by the distance sensor is determined to be greater than or equal to the preset distance, the processor adjusts the display parameters of the display screen only according to the placement state sensed by the direction sensor.

4. The electronic device according to claim 2, wherein, when the distance sensed by the distance sensor is determined to be smaller than the preset distance, the processor adjusts the display parameters of the display screen according to the placement state sensed by the direction sensor and the distance sensed by the distance sensor, comprises: the processor adjusts the display parameters of the display screen thus increasing a display quality of the display screen when the placement state of the electronic device sensed by the direction sensor changes from a reference position to a first preset position, and/or the distance sensed by the distance sensor gradually becomes smaller.

5. The electronic device according to claim 4, wherein, when the distance sensed by the distance sensor is determined to be smaller than the preset distance, the processor adjusts the display parameters of the display screen according to the placement state sensed by the direction sensor and the distance sensed by the distance sensor, comprises: the processor adjusts the display parameters of the display screen thus reducing the display quality of the display screen when the placement state of the electronic device sensed by the direction sensor changes from the first preset position or other preset position to the reference position, and/or the distance sensed by the distance sensor gradually becomes larger.

6. The electronic device according to claim 3, wherein, when the distance sensed by the distance sensor is greater than or equal to the preset distance, the processor adjusts the display parameters of the display screen only according to the placement state sensed by the direction sensor, comprises: the processor controls the display screen to display initial display parameters when the electronic device is in the reference position, and adjusts the display parameters of the display screen thus gradually reducing a display quality of the display screen until the display screen is closed when the electronic device changes from a reference position to other preset position except a first preset position.

7. The electronic device according to claim 6, wherein, when the distance sensed by the distance sensor is determined to be greater than or equal to the preset distance, the processor adjusts the display parameters of the display screen only according to the placement state sensed by the direction sensor, further comprises: when the electronic device changes from the other preset position to the reference position, the processor controls to turn on the display screen, and adjusts the display parameters of the display screen thus gradually increasing the display quality of the display screen; and when the electronic device reaches the reference position, the processor controls the display screen to display with initial display parameters.

8. The electronic device according to any one of claims 4 to 7, wherein, the reference position is a position where the electronic device is placed horizontally, and a front side of the electronic device faces up; the first preset position is a position where the electronic device is placed vertically and a top edge of the electronic device is located at a top position; the other preset position comprises a position where the front side of the electronic device faces down, a position where the electronic device is placed vertically and the top edge of the electronic device is located at a bottom position.

9. The electronic device according to any one of claims 4 to 7, wherein, the display parameters comprises resolution, sharpness, and brightness, and the processor adjusts display parameters of the display screen thus increasing the display quality of the display screen, comprises: the processor increases at least one of resolution, sharpness, and brightness of the display screen thus increasing the display quality of the display screen; the processor adjusts display parameters of the display screen thus reducing the display quality of the display screen, comprises: the processor reduces at least one of resolution, sharpness, and brightness of the display screen thus reducing the display quality of the display screen.

10. The electronic device according to claim 2, wherein, when the distance sensed by the distance sensor is less than the preset distance, the processor adjusts the display parameters of the display screen preferentially according to the distance sensed by the distance sensor.

11. The electronic device according to claim 1, wherein, the direction sensor is a gyroscope, and the distance sensor comprises at least one of a light distance sensor, an infrared distance sensor, and an ultrasonic sensor.

12. A display control method, applied to an electronic device, wherein the electronic device comprises a display screen, a direction sensor, and a distance sensor, and the distance sensor is disposed on a front side of the electronic device, and the method comprises steps of:
sensing a placement state of the electronic device by the direction sensor and sensing a distance of the electronic device from the target object located in front of the electronic device by the distance sensor;
adjusting display parameters of the display screen according to the placement state sensed by the direction sensor and the distance sensed by the distance sensor.

13. The method according to claim 12, wherein the step of "adjusting display parameters of the display screen according to the placement state sensed by the direction sensor and the distance sensed by the distance sensor" comprises:
firstly determining whether the distance sensed by the distance sensor is less than a preset distance;
adjusting the display parameters of the display screen according to the placement state sensed by the direction sensor and the distance sensed by the distance sensor when the distance sensed by the distance sensor is less than the preset distance.

14. The method according to claim 13, wherein, the step of "adjusting display parameters of the display screen according to the placement state sensed by the direction sensor and the distance sensed by the distance sensor" further comprises:
adjusting the display parameters of the display screen only according to the placement state sensed by the direction sensor when the distance sensed by the distance sensor is determined to be greater than or equal to the preset distance.

15. The method according to claim 13, wherein, the step of "adjusting the display parameters of the display screen according to the placement state sensed by the direction sensor and the distance sensed by the distance sensor when the distance sensed by the distance sensor is less than the preset distance" comprises:
adjusting the display parameters of the display screen thus increasing a display quality of the display screen when the placement state of the electronic device sensed by the direction sensor changes from a reference position to a first preset position, and/or the distance sensed by the distance sensor gradually becomes smaller.

16. The method according to claim 15, wherein the step of "adjusting the display parameters of the display screen according to the placement state sensed by the direction sensor and the distance sensed by the distance sensor when the distance sensed by the distance sensor is less than the preset distance" further comprises:
adjusting the display parameters of the display screen thus reducing the display quality of the display screen when the placement state of the electronic device sensed by the direction sensor changes from the first preset position to the reference position or other preset position, and/or the distance sensed by the distance sensor gradually becomes larger.

17. The method according to claim 14, wherein the step "adjusting the display parameters of the display screen only according to the placement state sensed by the direction sensor when the distance sensed by the distance sensor is determined to be greater than or equal to the preset distance", comprises:
controlling the display screen to display with initial display parameters when the electronic device is in the reference position, and adjusting the display parameters of the display screen thus gradually reducing a display quality of the display screen until the display screen is closed when the electronic device changes from the reference position to other preset position except a first preset position.

18. The method according to claim 17, wherein the step "adjusting the display parameters of the display screen only according to the placement state sensed by the direction sensor when the distance sensed by the distance sensor is determined to be greater than or equal to the preset distance" comprises:
controlling to turn on the display screen and adjusting the display parameters of the display screen thus gradually increasing the display quality of the display screen when the electronic device changes from the other preset position to the reference position; and
controlling the display screen to display with initial display parameters when the electronic device reaches the reference position.

19. The method according to any one of claims 15 to 18, wherein, the reference position is a position where the electronic device is placed horizontally, and a front side of the electronic device faces up; the first preset position is a position where the electronic device is placed vertically and a top edge of the electronic device is located at a top position; the other preset position comprises a position where the front side of the electronic device faces down, a position where the electronic device is placed vertically and the top edge of the electronic device is located at a bottom position.

20. The method according to any one of claims 15 to 18, wherein, the display parameters comprise resolution, sharpness and brightness, "adjusting the display parameters of the display screen thus increasing the display quality of the display screen" comprises: increasing at least one of resolution, sharpness, and brightness of the display screen thus increasing the display quality of the display screen; and "adjusting the display parameters of the display screen thus reducing the display quality of the display screen", comprises: reducing at least one of resolution, sharpness, and brightness of the display screen thus reducing the display quality of the display screen.
